# FASCICULE DE BREVET EUROPEEN

(11) **EP 1 164 854 B1**
(45) Date de publication et mention de la délivrance du brevet: **23.04.2003**
(21) Numéro de dépôt: 00915255.4
(22) Date de dépôt: 30.03.2000
(51) Int. Cl.: A21D 13/00, A21C 15/02, A21D 8/00

(54) **PROCEDE DE FABRICATION D'UN PRODUIT ALIMENTAIRE, DU TYPE PIZZA, NOTAMMENT POUR SA CONSOMMATION A LA MAIN, DISPOSITIF DE MISE EN OEUVRE ET PRODUIT OBTENU**
VERFAHREN ZUR HERSTELLUNG EINES NAHRUNGSMITTELS DES PIZZA-TYPES, INSBESONDERE ZUM VERBRAUCH MIT DER HAND, UND PRODUKT NACH DIESEM HERSTELLUNGSVERFAHREN
METHOD FOR THE PRODUCTION OF A PIZZA-TYPE FOOD PRODUCT FOR HAND CONSUMPTION, DEVICE FOR CARRYING OUT SAID METHOD AND PRODUCT THUS OBTAINED.

(30) Priorité: 30.03.1999 FR 9903957
(43) Date de publication de la demande: 02.01.2002
(73) Titulaire: Gerard Schlienger Investissements, 75004 Paris (FR)
(72) Inventeur: REBEAUD, Isabelle, 1009 Pully (CH)
(74) Mandataire: Orès, Bernard
(86) Numéro de dépôt international: FR0000805
(87) Numéro de publication internationale: WO00057710

(56) Documents cités:
- EP-A- 0 510 764
- WO-A-98/57547
- BE-A- 1 002 409
- FR-A- 2 383 608
- FR-A- 2 522 933
- US-A- 2 404 177
- US-A- 4 400 404
- US-A- 4 651 635

## Description

L'invention concerne un procédé de fabrication d'un produit alimentaire, du type pizza, notamment pour sa consommation à la main, le dispositif de mise en oeuvre et le produit obtenu.

On sait qu'une pizza traditionnelle ne peut-être consommée sans la nécessité d'une assiette en raison de sa taille et de sa forme ronde. De même, la division de cette pizza en parts, qu'elles soient triangulaires ou rectangulaires ne se prête pas non plus à une préhension et consommation simultanées convenables car les divers ingrédients contenus peuvent couler ou tomber.

On connaît en outre les pizzas à forme de chaussons dont les ingrédients enfermés par repliage de la pâte sont cuits à l'étouffée sous la pâte d'enveloppe repliée. Néanmoins, une cuisson satisfaisante des ingrédients conduit à surcuire la pâte d'enveloppe et à la carboniser. De plus, la cuisson à l'étouffée des ingrédients diminue nettement les qualités gustatives de cette pizza. Par ailleurs, la forme sensiblement demi-circulaire et peu rigide de ce type de pizza et le fait que les ingrédients sont cuits sous forme relativement pâteuse et peuvent donc couler ne permet pas sa préhension et consommation simultanées à la main.

On connaît en outre par FR-2 741 779, un procédé de fabrication d'un produit alimentaire, de type pizza, à forme d'étui et consommable comme un sandwich. Ce produit nécessite une cuisson du produit en deux temps.

Enfin, on connaît par US 2 404 177 (JETSCHMANN R.P.) un produit alimentaire et son procédé de fabrication, réalisé à partir de deux portions de pâte préformées demi-hémisphérique par cuisson à chaud, sensiblement au même format, remplies d'une matière alimentaire, crème ou autre et réunies opposées l'une à l'autre par leur bord, un joint de matière alimentaire étant déposé au niveau des bords superposés des portions pour solidariser et fermer l'ensemble des portions réunies. Néanmoins, la poche formée ne résulte pas du pliage à chaud après cuisson d'une même bande de pâte.

Par ailleurs, on connaît par US-A-4 400 404 et FR-A-2 522 933 un produit alimentaire issu d'une pâte crue garnie et repliée sur elle-même avant cuisson.

L'invention vise à remédier à ces inconvénients et propose un procédé de fabrication d'un produit alimentaire, du type pizza, caractérisé en ce qu'il consiste à :
- préparer une pâte à pizza crue étendue dans un format sensiblement double de celui du produit à obtenir ;
- disposer de façon classique sur cette pâte crue les divers ingrédients de pizza choisis, tels que sauce tomate, champignons, jambon, etc... ;
- cuire cette pâte avec ses ingrédients dans un four à pizza, sur la sole et à la chaleur ambiante de ce four ;
- replier sur elle-même la pâte garnie cuite à la sortie du four dans un format correspondant à celui du produit à obtenir, avec juxtaposition sensiblement des bords supérieur et inférieur de la pâte pliée ; et
- enduire la tranche et les éventuels ingrédients affleurant desdits bords sensiblement juxtaposés d'un cordon de pâte alimentaire, à base d'amidon et/ou fécule, lequel se solidifie sous la chaleur de la pâte en sortie de four avec prise sur la tranche desdits bords, fermant ainsi la poche constituée.

Il résulte de cette disposition que l'on obtient après refroidissement de la pâte un produit alimentaire de type pizza à forme de poche, enfermant les ingrédients de pizza et dont la rigidité après durcissement de la pâte permet sa préhension et consommation simultanée sans risque de fuite des ingrédients. La cuisson des ingrédients sur la pâte à l'air ambiant chaud du four demeure traditionnelle et préserve les qualités gustatives d'une cuisson classique de pizza.

Le format de la pâte à pizza crue étendue prête à la cuisson est avantageusement rectangulaire, de façon à former après repliage en deux parties égales un produit dont le format est également rectangulaire et régulier et correspond à la moitié de celui de la pâte étendue.

Le format du produit obtenu peut être celui d'un sandwich ordinaire dont les dimensions se prêtent à la préhension et consommation simultanée à la main.

Le cordon de jonction des bords des portions repliées peut être une pâte alimentaire simple issue d'un mélange d'une farine de grains de céréales et d'eau à la viscosité adéquate pour l'application adhérente sur lesdits bords.

L'invention concerne également un procédé de fabrication industrielle d'un produit alimentaire du type pizza, de format analogue à celui d'un sandwich, caractérisé en ce qu'il consiste à réaliser sur une chaîne de fabrication en continu les diverses opérations successives suivantes :
- la préparation d'une pâte à pizza crue,
- la dépose de cette pâte, par exemple par extrusion-laminage, sous forme d'une bande continue régulière de largeur sensiblement double de celle du produit à obtenir sur un tapis de convoyage en mouvement de la chaîne de fabrication,
- le garnissage en ingrédients pour pizza de la dite bande de pâte à pizza en défilement,
- la cuisson en défilement, dans un four tunnel par exemple, de la bande de pâte garnie,
- le repliage consécutif de la bande de pâte garnie cuite et chaude sur elle-même, bord à bord, sa découpe en élements de bande repliés à format de longueur déterminée, et la séparation desdits éléments de bande d'un intervalle réduit déterminé,
- l'application d'un cordon de pâte alimentaire, par exemple par injection de buse, sur la tranche périphérique de bordure des éléments de bande repliés, et le refroidissement du produit obtenu avant son conditionnement définitif.

Le repliage de la bande de pâte garnie cuite et chaude et donc encore souple, est effectué, par exemple, à l'aide de deux sabots convenablement coudés verticalement, repliant la bande entraînée en défilement en deux parties verticales égales appliquées l'une sur l'autre, et la découpe verticale a lieu à la suite à l'aide de deux lames de couteaux verticales actionnées latéralement.

La découpe et séparation des produits peut encore avoir lieu avant la cuisson au four.

L'invention concerne également un dispositif de mise en oeuvre du procédé susmentionné.

Le dispositif de mise en oeuvre selon l'invention comporte sur une chaîne de fabrication en continu les divers postes opérationnels successifs correspondants aux étapes de procédé précitées, à savoir :
- un poste de préparation d'une pâte à pizza crue,
- un poste d'extrusion-laminage de la pâte à pizza crue préparée, délivrée en une bande continue sur un tapis de convoyage en mouvement de ladite chaîne de fabrication, à une largeur et épaisseur déterminées,
- au moins un poste de garnissage en ingrédients pour pizza de la bande de pâte en défilement,
- un poste de cuisson, par exemple à four tunnel, disposé en chevauchement sur le tapis de convoyage de la pâte garnie, destiné à cuire cette dernière en continu, à une température et en un temps de passage déterminés,
- un poste de repliage sur elle-même, de type à sabots coudés verticaux, de la bande de pâte de défilement, suivi d'un poste de découpe à longueur et séparation des éléments de bande repliés,
- un poste de dépose d'un cordon de pâte alimentaire, à base d'amidon et/ou fécule, sur la tranche des bords sensiblement juxtaposés de chacun des éléments de pâte repliés, et
- un poste de refroidissement et conditionnement des éléments repliés obtenus formant le produit alimentaire définitif réalisé.

L'invention concerne également le produit alimentaire de type pizza réalisé, à forme de poche fermée par un cordon de pâte alimentaire en prise sur la tranche de son bord, formée à chaud pliée ou enroulée sur elle-même après cuisson avec durcissement du cordon.

L'invention est illustrée ci-après à l'aide d'exemples de réalisation et en référence au dessin annexé, sur lequel :
- la figure 1 est une vue en perspective d'un produit alimentaire de type pizza, à forme de sandwich, selon l'invention,
- la figure 2 est une vue schématique d'une chaîne de fabrication de ce produit alimentaire, et
- les figures 3 et 4 sont des vues en perspective de variantes de réalisation de produit alimentaire de type pizza, à forme de sandwich, selon l'invention.

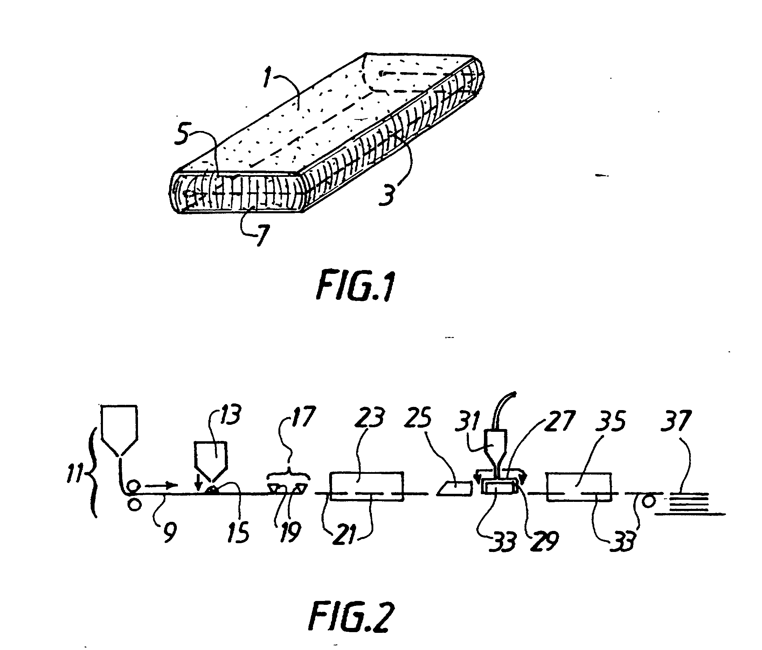

Le produit obtenu, tel qu'il est représenté à la figure 1 peut être réalisé de façon artisanale à la main ou de façon industrielle sur une chaîne de fabrication en continu.

Selon la façon artisanale, on prépare d'abord une pâte à pizza crue classique 1 que l'on étend sur une table de travail selon un format rectangulaire ou proche, par exemple de largeur d'environ 15 cm, longueur d'environ 25 cm et épaisseur d'environ 1 à 2 mm. Ce format correspond en largeur sensiblement au double de celui d'un sandwich. Il peut éventuellement être autre que rectangulaire, gardant néanmoins son caractère allongé.

On dispose et répartit ensuite de façon classique les ingrédients de garniture, tels que nappage de sauce tomate, morceaux de champignon et de fromage, selon le choix de pizza envisagé. On glisse une pelle sous cette pâte pour la prélever et l'introduire dans un four à pizza classique, à sole et voûte réfractaires chauffées entre 250 et 300°C et on pose la pâte 1 avec sa garniture sur la sole du four. La cuisson est effectuée à la chaleur ambiante du four pour les ingrédients et par le contact avec la sole pour la pâte de fond 1, de façon classique comme pour une pizza traditionnelle à une durée d'environ 60 secondes.

Ensuite, on sort du four l'ensemble pâte et garniture cuit et on le dispose à nouveau sur la table de travail.

Il s'agit alors de replier la pâte garnie chaude sur elle-même sensiblement selon une ligne longitudinale médiane de la pâte, ceci à l'aide d'une ou de deux pelles, l'une des pelles étant appliquée en maintien sur la première moitié et l'autre rabattant la seconde moitié sur la première. Ce faisant, on obtient le format définitif du produit à environ 7 x 25 cm.

On applique ensuite à l'aide d'une spatule un cordon 3 d'une pâte issue d'un mélange de farine et d'eau sur la tranche périphérique des bords supérieur 5 et inférieur 7, sensiblement juxtaposés de la pâte repliée, comme représenté sur la figure. La chaleur de la pâte, à 150-200°C, suffit à cuire et donc durcir le cordon 3 de fermeture de la poche constituée. Ce cordon durci, outre qu'il enferme les ingrédients de pizza dans la poche, participe à l'augmentation de la rigidité du produit obtenu pour sa consommation à la main, par exemple, dans un étui de protection, froid ou réchauffé.

Un exemple de procédé de fabrication industrielle est représenté à la figure 2.

Ce procédé met en oeuvre une chaîne de fabrication continue comportant un tapis de convoyage en mouvement (non représenté) d'une bande de pâte 9 délivrée à partir d'un poste d'extrusion-laminage 11 de la pâte à pizza préparée. La bande 9 de largeur double de celle du produit à obtenir (7-8 cm environ) et d'épaisseur calibrée (2-4 mm environ) défile ensuite au droit d'un ou plusieurs postes 13 de garnissage en ingrédients de pizza 15 (sauce tomate, petits morceaux de fromage, de jambon, etc... selon la gamme de pizza désirée) délivrés au fur et à mesure de l'avance de la bande. Pour certains ingrédients, la dépose peut également être effectuée manuellement.

La bande garnie passe ensuite au droit d'un poste 17 de découpe en fonds ou éléments garnis, à la longueur du produit à réaliser (environ 25 cm), effectuée au moyen de deux couteaux transversaux classiques 19 actionnés verticalement. Les fonds garnis découpés 21 sont alors séparés l'un de l'autre d'un petit intervalle (par exemple 3 cm), ceci au moyen d'une mise en arrêt butée séquentielle classique des fonds sur le tapis de convoyage. Au sujet de la découpe-séparation, il est à noter que cette opération peut encore être effectuée après cuisson ou après repliage de la bande, décrits ultérieurement.

Les fonds garnis séparés 21 passent ensuite dans un four tunnel 23 disposé en chevauchement du tapis et d'une longueur déterminée, cuisant les fonds en défilement à 300°-400°C pendant 30 à 40 secondes environ.

Les fonds cuits passent ensuite sur des sabots verticaux 25 de repliage sur eux-mêmes, bord à bord verticalement, des fonds. Ces sabots peuvent consister en deux platines articulées longitudinalement sur la ligne médiane de la chaîne et des fonds cuits, simultanément depuis une position horizontale de début de pliage à une position verticale de fin de pliage. La pâte encore chaude (à 150°-200°C) et donc souple permet un tel pliage médian. Les bords des plis de fonds garnis cuits sont alors sensiblement juxtaposés et il est possible de déposer à ce stade de repliage ou un peu plus loin, sur un poste adjacent de la chaîne, un cordon de pâte alimentaire 27. Ce cordon, à base d'amidon et/ou fécule, est déposé sur la tranche 29 des bords sensiblement juxtaposés des fonds repliés 33.

Cette pâte peut être issue d'un mélange de farine de blé et d'eau, éventuellement, avec d'autres additifs (colorants par exemple).Elle est déposée à la viscosité requise à l'aide d'un dispositif à buse d'éjection 31 déplacé sur le contour (3 côtés) des bords de pliage des fonds repliés. Le cordon 27 adhère parfaitement à la pâte cuite et aux ingrédients affleurants cuits des bords et ferme les fonds repliés 33. Le cordon 27 cuit et durcit sous la chaleur résiduelle des fonds (proches de la sortie du four) à environ 150°C, rigidifiant par conséquent le joint périphérique de fermeture du fond replié.

Les fonds repliés et fermés peuvent alors être déposés à plat sur le tapis de convoyage pour être refroidis dans une chambre de congélation ultérieure 35 avant de parvenir à un poste de stockage conditionnement terminal 37 du produit.

Le produit de type pizza obtenu, tel que représenté à la figure 1, à forme de sandwich et enfermant les ingrédients de pizza, est consommable à la main sans risque de fuite, écoulement ou chute de ceux-ci.

Naturellement, de nombreuses variantes de réalisation peuvent être imaginées dans le cadre de l'invention, quant à la forme de la poche constituée, triangulaire par exemple, de rabattre les bords dans la partie médiane longitudinale du produit constitué avec jonction de ceux-ci par le cordon alimentaire, la possibilité éventuelle de superposer deux pâtes cuites de même format, bord à bord, avec jonction périphérique du bord par un cordon de pâte alimentaire, de plier plusieurs fois la pâte de fond cuite et de l'enrouler sur elle-même.

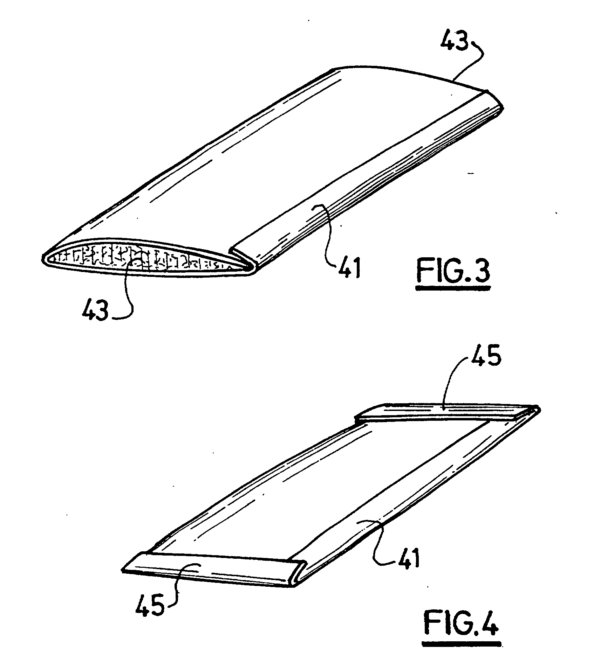

Par ailleurs, on notera que la poche formée peut être fermée sur un côté, (figure 3) par rabattement à chaud après cuisson d'un rebord longitudinal 41 d'une demi-portion de bande de pâte sur l'autre, la fermeture des côtés latéraux 43 étant obtenue par un cordon alimentaire comme précité. Le refroidissement de la pâte durcit le pliage du rebord qui demeure maintenu dans cette position, contribuant à la rigidité de la poche de pizza pour sa préhension et consommation à la main ultérieures.

Enfin, la poche peu être fermée (figure 4) par pliage d'un rebord longitudinal 41 et de rebords latéraux 45 d'une portion de pâte rabattus à chaud sur l'autre portion.

## Revendications

1. Procédé de fabrication d'un produit alimentaire, du type pizza, **caractérisé en ce qu'**il consiste à :
- préparer une pâte à pizza crue (1) étendue dans un format sensiblement double de celui du produit à obtenir ;
- disposer de façon classique sur cette pâte crue (1) les divers ingrédients de pizza choisis, tels que sauce tomate, champignons, jambon, etc... ;
- cuire cette pâte (1) avec ses ingrédients dans un four à pizza, sur la sole et à la chaleur ambiante de ce four ;
- replier sur elle-même la pâte garnie cuite (1) à la sortie du four dans un format correspondant à celui du produit à obtenir, avec juxtaposition sensiblement des bords supérieur (5) et inférieur (7) de la pâte pliée ; et
- enduire la tranche et les éventuels ingrédients affleurants desdits bords (5, 7) sensiblement juxtaposés d'un cordon de pâte alimentaire (3), à base d'amidon et/ou fécule, lequel se solidifie sous la chaleur de la pâte en sortie de four avec prise sur la tranche desdits bords, fermant ainsi la poche constituée.

2. Procédé selon la revendication 1, **caractérisé en ce que** le format de la pâte à pizza crue étendue (1) prête à la cuisson est avantageusement rectangulaire, de façon à former après repliage en deux parties égales un produit dont le format est également rectangulaire et régulier et correspond à la moitié de celui de la pâte étendue (1).

3. Procédé selon l'une des revendications 1, 2, **caractérisé en ce que** le cordon (3) de jonction des bords (5, 7) des portions repliées est une pâte alimentaire simple issue d'un mélange de farine de grains de céréales et d'eau à la viscosité adéquate pour l'application adhérente sur lesdits bords (5, 7).

4. Procédé de fabrication industrielle d'un produit alimentaire du type pizza, de format analogue à celui d'un sandwich, **caractérisé en ce qu'**il consiste à réaliser sur une chaîne de fabrication en continu les diverses opérations successives suivantes :
- la préparation d'une pâte à pizza crue,
- la dépose de cette pâte, par exemple par extrusion-laminage, sous forme d'une bande continue régulière (9) de largeur sensiblement double de celle du produit à obtenir sur un tapis de convoyage en mouvement de la chaîne de fabrication,
- le garnissage en ingrédients pour pizza (15) de la dite bande (9) de pâte à pizza en défilement,
- la cuisson en défilement, dans un four tunnel (23) par exemple, de la bande de pâte garnie,
- le repliage consécutif de la bande de pâte garnie cuite et chaude sur elle-même, bord à bord, sa découpe en éléments de bande repliés (33) à format de longueur déterminée, et la séparation desdits éléments de bande d'un intervalle réduit déterminé,
- l'application d'un cordon de pâte alimentaire (27), par exemple par injection de buse, sur la tranche périphérique de bordure (29) des éléments de bande repliés (33), et
- le refroidissement du produit obtenu avant son conditionnement définitif.

5. Procédé selon la revendication 4, **caractérisé en ce que** la découpe à longueur et séparation d'un petit intervalle des éléments de bande peut avoir lieu avant la cuisson au four.

6. Dispositif de mise en oeuvre du procédé selon l'une des revendications 4, 5, **caractérisé en ce qu'**il comporte sur une chaîne de fabrication en continu les divers postes opérationnels successifs correspondant aux étapes de procédé précitées, à savoir :
- un poste de préparation d'une pâte à pizza crue,
- un poste d'extrusion-laminage (11) de la pâte à pizza crue préparée, délivrée en une bande continue (9) sur un tapis de convoyage en mouvement de ladite chaîne de fabrication, à une largeur et épaisseur déterminées,
- au moins un poste (13) de garnissage en ingrédients pour pizza de la bande de pâte (9) en défilement,
- un poste de cuisson, par exemple à four tunnel (23), disposé en chevauchement sur le tapis de convoyage de la pâte garnie, destiné à cuire cette dernière en continu, à une température et en un temps de passage déterminés,
- un poste de repliage sur elle-même, de type à sabots coudés verticaux ou articulés (25), de la bande de pâte en défilement, suivi d'un poste de découpe à longueur et séparation des éléments de bande repliés (33),
- un poste de dépose d'un cordon de pâte alimentaire (27), à base d'amidon et/ou fécule, sur la tranche des bords sensiblement juxtaposés de chacun des éléments de pâte repliés (33), et
- un poste de refroidissement (35) et conditionnement (37) des éléments repliés obtenus (33) formant le produit alimentaire définitif réalisé.

7. Dispositif selon la revendication 6, **caractérisé en ce que** le poste de découpe à longueur et séparation des éléments de bande est disposé après le poste de cuisson.

8. Produit alimentaire de type pizza, réalisé à forme de poche fermée par un cordon de pâte alimentaire (3) en prise sur la tranche de son bord (5, 7), **caractérisé en ce que** la poche est formée à chaud, pliée ou enroulée sur elle-même, après garnissage en ingrédients de pizza et cuisson, avec durcissement du cordon (3).

9. Produit alimentaire de type pizza, selon la revendication 8, **caractérisé en ce que** ladite poche formée est fermée sur un côté, par rabattement à chaud après cuisson d'un rebord longitudinal (41) d'une demi-portion de bande de pâte sur l'autre, la fermeture des côtés latéraux (43) étant obtenue par un cordon alimentaire.

## Patentansprüche

1. Verfahren zur Herstellung eines Nahrungsmittelproduktes vom Pizza-Typ, **dadurch gekennzeichnet, daß** es umfaßt:
- Bereiten eines rohen Pizzateiges (1), der in ein Format ausgebreitet ist, das im wesentlichen das doppelte Format des herzustellenden Produktes ist;
- Anordnen der verschiedenen ausgewählten Pizzazutaten, wie Tomatensauce, Champignons, Schinken u. dgl. auf klassische Weise auf dem rohen Teig (1) ;
- Garen des Teiges (1) mit seinen Zutaten in einem Pizzaofen auf der Sohle sowie bei der Umgebungswärme dieses Ofens;
- Falten des Teiges (1) beim Herausnehmen aus dem Ofen auf sich selbst in ein Format, das dem des herzustellenden Produktes entspricht, so daß der obere (5) und untere (7) Rand des gefalteten Teiges im wesentlichen nebeneinanderliegen; und
- Überziehen der Schmalseite der im wesentlichen nebeneinanderliegenden Ränder (5, 7) sowie gegebenenfalls über diese vorstehender Zutaten mit einem Strang Lebensmittelpaste (3) auf Stärke- und/oder Stärkemehlbasis, der sich infolge der Hitze des Teiges beim Herausnehmen aus dem Ofen unter Abbinden auf der Schmalseite der Ränder verfestigt und dadurch die gebildete Tasche verschließt.

2. Verfahren nach Anspruch 1, **dadurch gekennzeichnet, daß** das Format des zum Garen bereiten, ausgebreiteten rohen Pizzateiges (1) vorzugsweise rechteckig ist, so daß er nach dem Falten in zwei gleich große Abschnitte ein Produkt bildet, dessen Format ebenfalls rechteckig und regelmäßig ist und der Hälfte des Formats des ausgebreiteten Teiges (1) entspricht.

3. Verfahren nach einem der Ansprüche 1, 2, **dadurch gekennzeichnet, daß** der Strang (3) zum Verbinden der Ränder (5, 7) der gefalteten Abschnitte eine einfache Lebensmittelpaste aus einer Mischung von Mehl aus Getreidekörnern und Wasser mit der für die anhaftende Aufbringung auf die Ränder (5, 7) geeigneten Viskosität ist.

4. Verfahren zur industriellen Fabrikation eines Nahrungsmittelproduktes vom Pizza-Typ mit einem Format ähnlich dem eines Sandwich, **dadurch gekennzeichnet, daß** es darin besteht, auf einer Linie für die kontinuierliche Fabrikation die folgenden verschiedenen, aufeinanderfolgenden Arbeitsschritte durchzuführen:
- Bereiten eines rohen Pizzateiges,
- Ablegen des Teiges, z.B. durch Extrusionsauftrag, in Form einer kontinuierlichen regelmäßigen Bahn (9) mit einer Breite, die im wesentlichen doppelt so groß wie diejenige des herzustellenden Produktes ist, auf einem sich bewegenden Förderband der Produktionslinie,
- Belegen der vorbeilaufenden Bahn (9) aus Pizzateig mit Pizzazutaten (15),
- Garen der belegten Teigbahn beim Durchlauf beispielsweise in einem Tunnelofen (23),
- fortlaufendes Falten der gegarten und heißen belegten Teigbahn auf sich selbst Rand auf Rand, ihr Zerschneiden in gefaltete Bahnstücke (33) mit einem Format mit vorgegebener Länge, und Trennen der Bahnstücke durch einen vorgegebenen geringen Abstand,
- Aufbringen eines Stranges (27) aus Lebensmittelpaste, z.B. mittels Tüllenspritzen, auf die umfangsseitige Schmalseitenfläche (29) der gefalteten Bahnstücke (33), und
- Kühlen des hergestellten Produktes vor seinem endgültigen Abpacken.

5. Verfahren nach Anspruch 4, **dadurch gekennzeichnet, daß** das Ablängen und Trennen mit einem geringen Abstand der Bahnstücke vor dem Garen im Ofen stattfinden kann.

6. Vorrichtung zur Anwendung des Verfahrens nach einem der Ansprüche 4, 5, **dadurch gekennzeichnet, daß** sie auf einer kontinuierlichen Fabrikationslinie die verschiedenen aufeinanderfolgenden, den vorgenannten Arbeitsschritten entsprechenden Arbeitsstationen aufweist, nämlich:
- eine Station zum Bereiten eines rohen Pizzateiges,
- eine Station zum Extrusionsauftrag (11) des bereiteten rohen Pizzateiges mit einer vorgegebenen Breite und Dicke, welcher als Endlosbahn (9) auf einem sich bewegenden Förderband der Fabrikationslinie gefördert wird,
- mindestens eine Station (13) zum Belegen der vorbeilaufenden Teigbahn (9) mit Pizzazutaten,
- eine Garstation, z.B. mit Tunnelofen (23), die in Überdeckung mit dem Band zum Fördern des belegten Teiges angeordnet ist, für dessen kontinuierliches Garen bei einer vorgegebenen Temperatur und in einer vorgegebenen Durchlaufzeit,
- eine Station zum Falten der vorbeilaufenden Teigbahn auf sich selbst vom Typ mit vertikalen oder gelenkigen Winkelblöcken (25), gefolgt von einer Station zum Ablängen und Trennen der gefalteten Bahnstücke (33),
- eine Station zum Aufbringen eines Stranges (27) aus Lebensmittelteig auf Stärke- und/oder Stärkemehlbasis auf der Schmalseite der im wesentlichen nebeneinanderliegenden Ränder eines jeden der gefalteten Teigstücke (33), und
- eine Station zum Kühlen (35) und Abpacken (37) der hergestellten gefalteten Stücke (33), welche das letztendlich herzustellende Lebensmittelprodukt bilden.

7. Vorrichtung nach Anspruch 6, **dadurch gekennzeichnet, daß** die Station zum Ablängen und Trennen der Bahnstücke nach der Garstation angeordnet ist.

8. Lebensmittelprodukt vom Pizzatyp, ausgebildet in Form einer Tasche, die durch einen auf der Schmalseite ihres Randes (5, 7) abgebundenen Strang Lebensmittelteig (3) verschlossen ist, **dadurch gekennzeichnet, daß** die Tasche warm gebildet wird, nach dem Belegen mit Pizzazutaten und Garen auf sich selbst gefaltet oder gerollt wird, mit Aushärten des Stranges (3).

9. Lebensmittelprodukt vom Pizzatyp nach Anspruch 8, **dadurch gekennzeichnet, daß** die gebildete Tasche auf einer Seite durch Umschlagen eines Längsrandes (41) eines halben Teigbahnabschnitts über den anderen im warmen Zustand nach dem Garen geschlossen wird, wobei das Verschließen der Seitenflächen (43) mit Hilfe eines Lebensmittelstranges erhalten wird.

## Claims

1. Method for preparing a food product of the pizza type, **characterized in that** it consists of:
- preparing an uncooked pizza dough (1) spread out in a format substantially double that of the product to be obtained;
- depositing, in a conventional manner, various selected pizza ingredients such as tomato sauce, mushrooms, ham etc onto this uncooked dough (1);
- cooking this dough (1) together with its ingredients on the hearth of a pizza oven at the ambient heat of this oven;
- folding the filled cooked dough (1) on itself on leaving the oven into a format corresponding to that of the product to be obtained, with the upper (5) and lower (7) edges of the folded cooked dough being substantially juxtaposed; and
- covering the rim and ingredients that may show through the said substantially juxtaposed edges (5, 7) with a bead of dough (3) based on cereal starch and/or potato starch, which solidifies under the heat of the dough as it leaves the oven with setting of the said edges on the rim, in this way closing the pocket formed.

2. Method according to claim 1, **characterized in that** the format of the ready-to-cook spread uncooked pizza dough is advantageously rectangular so as to form, after folding into two equal parts, a product of which the format is also rectangular and regular and corresponds to half of that of the spread dough (1).

3. Method according to either of claims 1 or 2, **characterized in that** the bead (3) at the junction of the edges (5,7) of the folded portions, is a simple dough made from a mixture of cereal grain flour and water with a suitable viscosity for application adhesively to the said edges (5,7).

4. Method for the industrial production of a food product of the pizza type, with a similar format to that of a sandwich, **characterized in that** it consists of performing the following various successive operations on a continuous production line:
- preparing an uncooked pizza dough,
- depositing this dough, for example by extrusion-rolling, in the form of a regular continuous strip (9) with a width substantially double that of the product to be obtained, onto a moving conveyor belt of the production line,
- topping the said moving strip of pizza dough (9) with pizza ingredients(15)
- cooking the moving strip of topped dough in a tunnel oven (23) for example,
- consecutively folding the cooked hot strip of dough with its topping onto itself, edge to edge, cutting it into folded strip elements (33) with a format having a specific length, and separating the said strip elements by a specific small gap,
- applying a bead of dough (27), for example by injection with a nozzle, onto the peripheral rim of the edge (29) of the folded strip elements (33), and
- cooling the product obtained before finally packaging it.

5. Method according to claim 4, **characterized in that** the strip elements may be cut to length and separated by a small gap before they are cooked in the oven.

6. Method according to claim 4, **characterized in that** the strip elements may be cut to length and separated by a small gap before they are cooked in the oven 6. Device for implementing the method according to either of claims 4 or 5, **characterized in that** it comprises, on a continuous production line, various successive operational units corresponding to the aforementioned steps of the method, namely:
- a unit for preparing an uncooked pizza dough,
- a unit for extrusion-rolling (11) the prepared uncooked pizza dough, delivered in a continuous strip (9) onto a moving conveyor belt of the said production line, in a specific width and thickness,
- at least one unit (13) for topping the moving strip of dough (9) with pizza ingredients,
- a cooking unit, for example a tunnel oven (23), positioned straddling the belt conveying the topped dough, designed to cook the latter continuously at a specific temperature and with a specific transit time,
- a unit for folding the moving strip of dough on itself, of the type with vertical or articulated elbowed shoes (25) followed by a unit for cutting the folded strip elements to length and separating them (33),
- a unit for depositing a bead of dough (27) based on cereal starch and/or potato starch onto the rim of the substantially juxtaposed edges of each of the folded pastry elements (33), and
- a station for cooling (35) and packaging (37) the folded elements obtained (33) forming the final food product produced.

7. Device according to claim 6, **characterized in that** the unit for cutting the strip elements to length and separating them is positioned after the cooking unit.

8. Food product of the pizza type, produced in the form of a pocket closed by a bead of dough (3) set onto the rim of its edge (5, 7), **characterized in that** the pocket it formed hot, folded or rolled on itself, after topping with pizza ingredients and cooking, with hardening of the bead (3).

9. Food product of the pizza type according to claim 8, **characterized in that** the said formed pocket is closed on one side by folding back when hot and after cooking, a longitudinal edge (41) of one half-portion of the strip of pastry onto the other, the lateral sides (43) being closed by a food-based bead.
